# EUROPEAN PATENT APPLICATION

(11) **EP 4 664 579 A1**
(43) Date of publication of application: **17.12.2025**
(21) Application number: 25182222.7
(22) Date of filing: 12.06.2025
(51) Int. Cl.: H01M 10/04, H01M 10/0587, H01M 50/586, H01M 50/593

(54) **CYLINDRICAL BATTERY WITH EXPANSION TAPE**

(30) Priority: 14.06.2024 CN 202421365994 U
(71) Applicant: Techtronic Cordless GP, Anderson, SC 29621 (US)
(72) Inventor: WU, Kun, Dongguan City (CN); WU, Jia Qing, Dongguan City (CN); GENG, Dan, Dongguan City (CN); LI, Jin Wei, Dongguan City (CN)
(74) Representative: Meissner Bolte Partnerschaft mbB

(57) **Abstract**

The present invention provides a cylindrical battery with expansion tape. The cylindrical battery comprises an outer housing and a wound core accommodated in the outer housing, wherein the wound core is obtained by winding and flattening a positive electrode sheet, a negative electrode sheet and a separator. The wound core comprises a positive electrode end face and a negative electrode end face, and expansion tape is wound around an outer periphery of the wound core. At least at a positive electrode end of the wound core, before expansion of the expansion tape, the top of the expansion tape is level with or higher than the top of the separator. The cylindrical battery with expansion tape of the present invention is able to reduce the risk of short circuits due to aluminum foil folding over and coming into contact with an outer housing, and also conforms to an existing structural tolerance design, so will not give rise to new, secondary problems.

## Description

### Technical Field

The present invention relates to the field of batteries, in particular to a cylindrical battery with expansion tape.

### Background Art

Batteries or battery packs are crucial for providing power to many electronic devices used daily. Batteries formed by wound cores that are compositely formed by winding are called wound batteries. They are widely favored in the field of energy storage, with a larger startup current, good shock-resistant capability, and excellent high and low temperature performance and cycle life.

At present, full-tab positive and negative electrodes have started to be widely used for batteries. That is, when a positive electrode current collector (typically aluminum foil) is coated with a positive electrode slurry, a partial area uncoated with the slurry (a positive electrode bare foil zone) is reserved at an end edge, and when a negative electrode current collector (typically copper foil) is coated with a negative electrode slurry, a partial area uncoated with the slurry (a negative electrode bare foil zone) is reserved at an end edge. Once a positive electrode sheet, a negative electrode sheet and a separator have been wound to form a wound-core wound body, flattening is performed; a foil shaped body of the positive electrode bare foil zone forms a tab end face of the positive electrode (i.e. a positive electrode end face), and a foil shaped body of the negative electrode bare foil zone forms a tab end face of the negative electrode (i.e. a negative electrode end face). The tab end faces need to be welded to collector plates, to allow battery current to be outputted from the collector plates.

Generally, the electrical insulation of the wound battery is required to insulate the wound core from the battery outer housing, and to insulate the wound core from an end cap. However, after flattening of a conventional full-tab cell, even with an insulating cap for protection, there is still a risk that an outer ring of aluminum foil will fold over and come into contact with the outer housing, thus causing a short circuit.

For this reason, there is a need for a cylindrical battery design with expansion tape, which is able to reduce the risk of short circuits due to aluminum foil folding over and coming into contact with the outer housing, and which also conforms to an existing structural tolerance design, and will not give rise to new, secondary problems.

### Summary of the Invention

An object of the present invention is to provide a cylindrical battery with expansion tape. The cylindrical battery with expansion tape of the present invention is able to reduce the risk of short circuits due to aluminum foil folding over and coming into contact with an outer housing, and also conforms to an existing structural tolerance design, so will not give rise to new, secondary problems.

The present invention provides a cylindrical battery with expansion tape, the cylindrical battery comprising:
an outer housing and a wound core accommodated in the outer housing,
wherein the wound core is obtained by winding and flattening a positive electrode sheet, a negative electrode sheet and a separator; the wound core comprises a positive electrode end face and a negative electrode end face, and expansion tape is wound around an outer periphery of the wound core; at least at a positive electrode end of the wound core, before expansion of the expansion tape, the top of the expansion tape is level with or higher than the top of the separator.

In an embodiment, a height H₁ by which the top of the expansion tape is higher than the top of the separator is 0 mm to 1 mm, preferably 0.1 mm to 0.9 mm, more preferably 0.2 mm to 0.8 mm, and further preferably 0.3 mm to 0.8 mm.

In an embodiment, after expansion of the expansion tape, the top of the expansion tape is level with the positive electrode end face.

In an embodiment, the expansion tape separates the positive electrode end of the wound core from the outer housing.

In an embodiment, the positive electrode end of the wound core comprises a tapered portion, and the expansion tape fills a gap between the tapered portion and the outer housing.

In an embodiment, a width H of the expansion tape is 60 mm to 65 mm, preferably 61 mm to 65 mm, more preferably 62 mm to 64 mm, and further preferably 62.8 mm to 63.3 mm.

In an embodiment, the bottom of the expansion tape is higher than the bottom of the separator, by a height H₂ of 1 mm to 4 mm, preferably 1.5 mm to 3.5 mm, more preferably 2 mm to 3 mm, and further preferably 2.5 mm.

In an embodiment, the top of the wound core is further provided with an insulating cap.

In an embodiment, the insulating cap at least partially covers the expansion tape.

In an embodiment, the insulating cap is of a flat-plate type, and the expanded expansion tape abuts the insulating cap.

In an embodiment, the expansion tape expands in the directions of three dimensions, namely length, width and thickness, after coming into contact with electrolyte.

In an embodiment, a positive electrode current collector of the wound core is aluminum foil, and the ratio of an exposed height of the aluminum foil to a height of the wound core is 1 : 1 to 1 : 200.

In an embodiment, the top of the expansion tape is located between the top of the separator and a position 0.8 mm above the top of the separator before flattening of the wound core, and a flattening process step will proceed until a position 0.8 mm above the top of the separator is reached and then stop, so there will be no interference with a position of the expansion tape.

Other features and advantages of the present invention are expounded in the detailed description below, and, for a person skilled in the art, according to this description, these will be obvious, or recognized by implementing the embodiments as described below and described together with the claims and drawings.

It will be understood that the general description above and detailed description below are exemplary, and are merely intended to provide an overview or framework for understanding the nature and features of the present invention and the attached claims. As a non-limiting example, multiple features of the present invention can be combined with each other according to the embodiments below.

### Brief Description of the Drawings

To better understand the above and other objectives, features, advantages and functions of the present invention, the preferred embodiments shown in the drawings may be referred to. In the drawings, identical reference signs denote identical components. Those skilled in the art will understand that the drawings are intended to schematically clarify preferred embodiments of the present invention, without limiting the scope of the present invention in any way, and the various components in the drawings are not drawn to scale.
Fig. 1 is a schematic drawing of the structure of a wound core in the prior art (before flattening).
Fig. 2 is a schematic drawing of the structure of a wound core according to a preferred embodiment of the present invention (before flattening).
Fig. 3 is a schematic drawing of the structure of a wound core in the prior art (after flattening).
Fig. 4 is a schematic drawing of the structure of a wound core according to a preferred embodiment of the present invention (after flattening).
Fig. 5 is a schematic drawing of the structure of a wound core according to another preferred embodiment of the present invention (after flattening).

### Key to the drawings:

1 positive electrode end;
11 positive electrode end face;
12 tapered portion;
2 negative electrode end;
21 negative electrode end face;
3 separator;
4 expansion tape;
5 current collector;
6 insulating cap;
h₁ is the height by which the top of the separator is higher than the top of the expansion tape in the prior art;
h₂ is the height by which the bottom of the expansion tape is higher than the bottom of the separator in the prior art;
h is the width of the expansion tape in the prior art;
H₁ is the height by which the top of the expansion tape is higher than the top of the separator in the present invention;
H₂ is the height by which the bottom of the expansion tape is higher than the bottom of the separator in the present invention;
H is the width of the expansion tape in the present invention.

### Detailed Description of Embodiments

Particular embodiments of the present invention are now described in detail with reference to the drawings. The embodiments described here are merely preferred embodiments according to the present invention; based on these preferred embodiments, those skilled in the art will be able to think of other ways in which the present invention may be implemented, which likewise fall within the scope of the present invention.

Unless explicitly stated otherwise, it is not intended that any apparatus be required to have a specific orientation. Therefore, if an order or direction of individual components is not actually stated in any apparatus claim, or if, in the claims or this description, it is not otherwise specifically stated that steps must be limited to a specific order, or a specific order or direction of components of an apparatus is not stated, it is not intended in any way that the order or direction thereof be inferred.

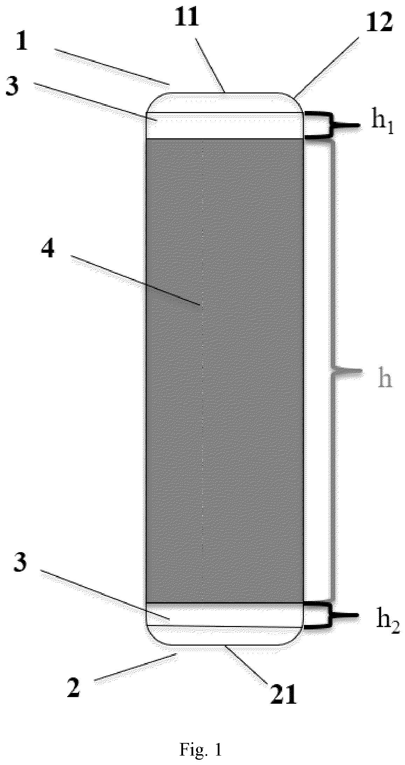

Figs. 1 - 5 show a cylindrical battery with expansion tape according to the present invention. It should first be explained that the directional and positional terms in the present invention should be understood to mean relative directions and positions, rather than absolute directions and positions. The directional and positional terms in the present invention can be interpreted with reference to the exemplary structures shown in Figs. 1 - 5.

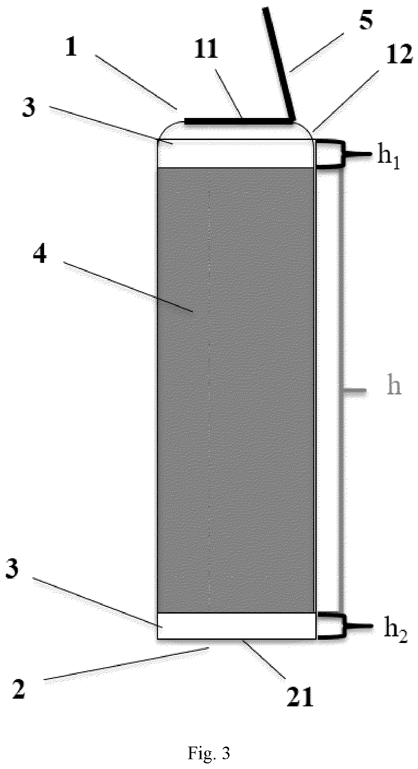

In the course of actual production research, the inventors found that the electrical insulation of a wound battery is required to insulate the wound core from the battery outer housing, and to insulate the wound core from the end cap. However, in the prior art, as shown in Fig. 1 (before flattening) and Fig. 3 (after flattening), a typically provided cylindrical battery comprises an outer housing and a wound core accommodated in the outer housing, wherein the wound core is obtained by winding a positive electrode sheet, a negative electrode sheet and a separator 3, and then flattening two ends. The wound core comprises a positive electrode end face 11 and a negative electrode end face 21, and expansion tape 4 is wound around an outer periphery of the wound core, wherein the top of the expansion tape 3 is obviously lower than the top of the separator 3. The inventors have found that such a design has the following problems: after flattening of the cell, even with an insulating cap for protection, there is still a risk that an outer ring of aluminum foil will fold over and come into contact with the outer housing, thus causing a short circuit. For this reason, there is a need for a cylindrical battery design with expansion tape, which is able to eliminate the risk of short circuits due to aluminum foil folding over and coming into contact with the outer housing, and which also conforms to an existing structural tolerance design, and will not give rise to new, secondary problems.

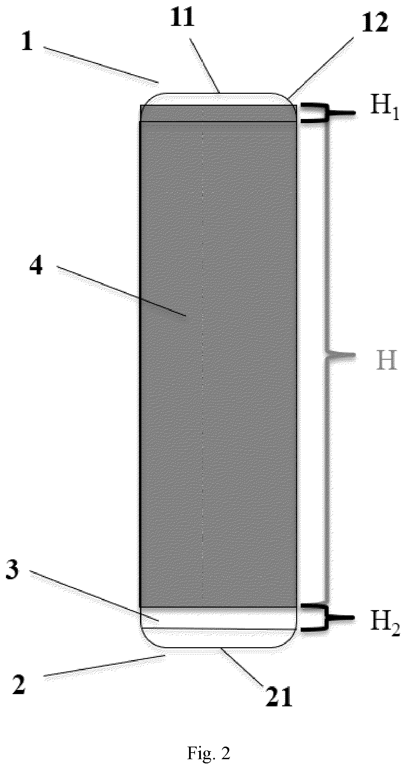

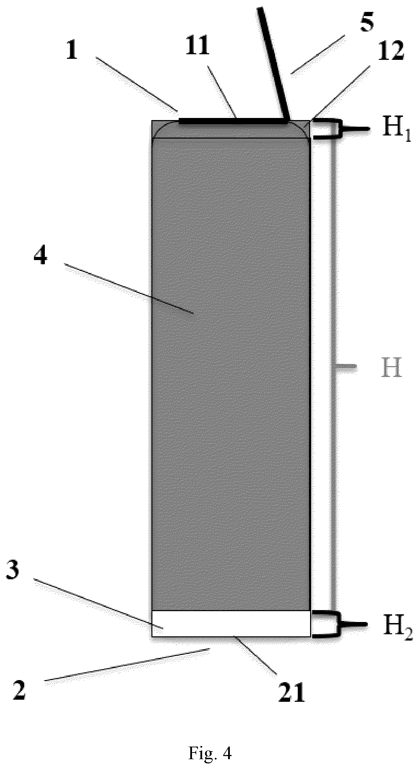

Now referring to Fig. 2 (before flattening) and Fig. 4 (after flattening), according to a first aspect of the present invention, a cylindrical battery is provided. The cylindrical battery comprises: an outer housing and a wound core accommodated in the outer housing, wherein the wound core is obtained by winding and flattening a positive electrode sheet, a negative electrode sheet and a separator 3. The wound core comprises a positive electrode end face 11 and a negative electrode end face 21, and expansion tape 4 is wound around an outer periphery of the wound core. At least at a positive electrode end 1 of the wound core, before expansion of the expansion tape 4, the top of the expansion tape 4 is level with or higher than the top of the separator 3. The inventors have found that such a design can effectively avoid the risk of short circuits due to aluminum foil folding over and coming into contact with the outer housing.

The inventors found through multiple experiments that the short circuit protection effect is better when a height H₁ by which the top of the expansion tape 4 is higher than the top of the separator 3 is 0 mm (i.e. the top of the expansion tape 4 is level with the top of the separator 3) to 1 mm, preferably 0.1 mm to 0.9 mm, more preferably 0.2 mm to 0.8 mm, and further preferably 0.3 mm to 0.8 mm. Specifically, once the abovementioned wound core is immersed in electrolyte, the expansion tape 4 will expand in the directions of three dimensions, namely length, width and thickness, and can fill a gap between the wound core and an insulating cap 6 effectively; furthermore, both the expansion tape 4 and the insulating cap 6 are of soft material, so will not experience hard compression. Moreover, the expanded expansion tape 4 and the insulating cap 6 form double protection, completely covering the entire positive electrode end 1 so that it does not come into contact with a steel shell, and are able to withstand the high temperatures of charging and discharging at high C-rates. In addition, the design of the expansion tape 4 in the present invention conforms to an existing structural tolerance design, and will not give rise to new, secondary problems.

In another preferred embodiment, the short circuit protection effect is better if the top of the expansion tape 4 is level with the positive electrode end face 11 after expansion of the expansion tape 4. The expansion tape 4 separates the positive electrode end 1 of the wound core from the outer housing. Further preferably, the positive electrode end 1 of the wound core comprises a tapered portion 12, and the expansion tape 4 fills a gap between the tapered portion 12 and the outer housing.

Generally, a width H of the expansion tape 4 must be matched to a height of the wound core of the cylindrical battery. For example, as shown in Figs. 2, 4 and 5, in an embodiment, the width H of the expansion tape 4 is 60 mm to 65 mm, preferably 61 mm to 65 mm, more preferably 62 mm to 64 mm, and further preferably 62.8 mm to 63.3 mm.

Continuing to refer to Figs. 2, 4 and 5, generally, the bottom of the expansion tape 4 is higher than the bottom of the separator 3; the present invention need not impose any specific restrictions in this respect. The only requirement is that the bottom of the wound core does not experience a short circuit, and the battery can be used normally. In a preferred embodiment of the present invention, a height H₂ by which the bottom of the expansion tape 4 is higher than the bottom of the separator 3 is 1 mm to 4 mm, preferably 1.5 mm to 3.5 mm, more preferably 2 mm to 3 mm, and further preferably 2.5 mm.

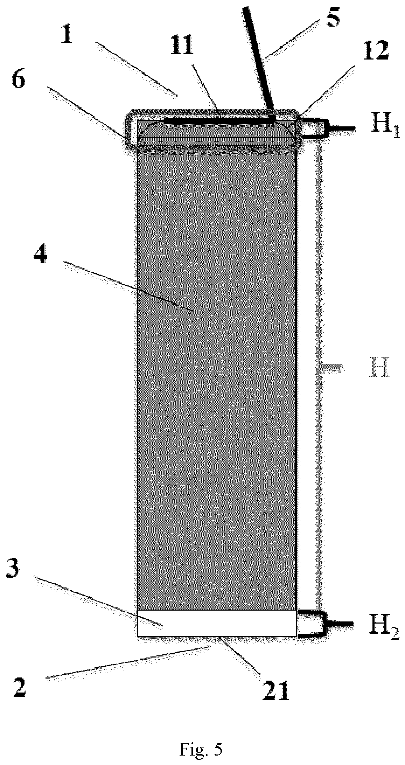

In addition, referring to Fig. 5, in a further preferred embodiment, the top of the wound core is also provided with the insulating cap 6. In an embodiment, the material of the insulating cap 6 is an insulating material. In a preferred embodiment, the insulating cap 6 at least partially covers the expansion tape 4. In a preferred embodiment, the insulating cap 6 is of a flat-plate type, and the expanded expansion tape 4 abuts the insulating cap 6.

At the same time, in an embodiment, the material of the expansion tape 4 is likewise an insulating material. In a preferred embodiment, the expansion tape 4 expands in the directions of three dimensions, namely length, width and thickness, after coming into contact with the electrolyte.

Continuing to refer to Figs. 2, 4 and 5, in a preferred embodiment, a positive electrode current collector of the wound core is aluminum foil, and in order to achieve the technical effect of preventing short circuits, the ratio of an exposed height of the aluminum foil to the height of the wound core is 1 : 1 to 1 : 200.

In addition, in a flattening process step, if the expansion tape 4 interferes with a flattening head during flattening, the expansion tape 4 will be rubbed into it, and debris will be rubbed into the positive electrode end face 11, causing problems such as excessive resistance, short circuits and poor welding between a collector plate 5 and the positive electrode end face 11. Thus, to avoid these problems, in the course of the flattening process step, with the top of the expansion tape 4 located between the top of the separator 3 and a position 0.8 mm above the top of the separator 3 before flattening of the wound core, the flattening process step will proceed until a position 0.8 mm above the top of the separator 3 is reached and then stop, so there will be no interference with the position of the expansion tape 4. Furthermore, when the distance from the expansion tape 4 to the flattened face (the positive electrode end face 11) is 0 mm to 0.8 mm, in particular 0.8 mm, once the wound core is immersed in electrolyte, the expansion tape 4 will expand in the directions of three dimensions, namely length, width and thickness, and can fill a gap between the wound core and the insulating cap 6 effectively; furthermore, both the expansion tape 4 and the insulating cap 6 are of soft material, so will not experience hard compression.

In some embodiments, at the positive electrode end 1 of the wound core, as shown in Fig. 1, a tapered portion 12 is formed at a flattened portion. Preferably, the top of the expanded expansion tape 4 is level with the positive electrode end face 11. The expanded expansion tape 4 is able to fill a gap between the tapered portion 12 and the outer housing. That is to say, the expanded expansion tape 4 fills a gap between the positive electrode end 1 of the wound core and the outer housing.

In some embodiments, if the insulating cap 6 is provided, the expanded expansion tape 4 and the insulating cap 6 form double protection, completely covering the entire positive electrode end 1 so that it does not come into contact with the steel shell, and are able to withstand the high temperatures of charging and discharging at high C-rates. In some embodiments, the insulating cap 6 may be omitted. In some embodiments, the insulating cap 6 may be designed in the form of a flat plate (flat-plate type), and the expanded expansion tape 4 abuts the insulating cap 6. In addition, the design of the expansion tape 4 in the present invention conforms to an existing structural tolerance design, and will not give rise to new, secondary problems.

The above description of various embodiments of the present invention is provided to a person skilled in the art for the purpose of description. It is not intended that the present disclosure be exclusive or be limited to a single disclosed embodiment. Based on the above, a person of ordinary skill in the art as taught above will understand various substitutes for and variants of the present disclosure. Therefore, although some alternative embodiments have been specifically described, a person skilled in the art will understand, or develop with relative ease, other embodiments. The present disclosure is intended to include all alternatives, modifications and variants described here, as well as other embodiments falling within the spirit and scope of the present disclosure described above.

## Claims

1. A cylindrical battery, comprising:
an outer housing and a wound core accommodated in the outer housing,
wherein the wound core is obtained by winding and flattening a positive electrode sheet, a negative electrode sheet and a separator (3); the wound core comprises a positive electrode end face (11) and a negative electrode end face (21), and expansion tape (4) is wound around an outer periphery of the wound core; at least at a positive electrode end (1) of the wound core, before expansion of the expansion tape (4), the top of the expansion tape (4) is level with or higher than the top of the separator (3).

2. The cylindrical battery as claimed in claim 1, wherein a height H₁ by which the top of the expansion tape (4) is higher than the top of the separator (3) is 0 mm to 1 mm, preferably 0.1 mm to 0.9 mm, more preferably 0.2 mm to 0.8 mm, and further preferably 0.3 mm to 0.8 mm.

3. The cylindrical battery as claimed in either claim 1 or claim 2, wherein after expansion of the expansion tape (4), the top of the expansion tape (4) is level with the positive electrode end face (11).

4. The cylindrical battery as claimed in any one of the previous claims, in particular claim 3, wherein the expansion tape (4) separates the positive electrode end (1) of the wound core from the outer housing.

5. The cylindrical battery as claimed in any one of the previous claims, in particular claim 3, wherein the positive electrode end (1) of the wound core comprises a tapered portion (12), and the expansion tape (4) fills a gap between the tapered portion (12) and the outer housing.

6. The cylindrical battery as claimed in any one of the previous claims, wherein a width H of the expansion tape (4) is 60 mm to 65 mm, preferably 61 mm to 65 mm, more preferably 62 mm to 64 mm, and further preferably 62.8 mm to 63.3 mm.

7. The cylindrical battery as claimed in any one of the previous claims, wherein the bottom of the expansion tape (4) is higher than the bottom of the separator (3), by a height H₂ of 1 mm to 4 mm, preferably 1.5 mm to 3.5 mm, more preferably 2 mm to 3 mm, and further preferably 2.5 mm.

8. The cylindrical battery as claimed in any one of the previous claims, wherein the top of the wound core is further provided with an insulating cap (6).

9. The cylindrical battery as claimed in claim 8, wherein the insulating cap (6) at least partially covers the expansion tape (4).

10. The cylindrical battery as claimed in either claim 8 or claim 9, wherein the insulating cap (6) is of a flat-plate type, and the expanded expansion tape (4) abuts the insulating cap (6).

11. The cylindrical battery as claimed in any one of the previous claims, wherein the expansion tape (4) expands in the directions of three dimensions, namely length, width and thickness, after coming into contact with electrolyte.

12. The cylindrical battery as claimed in any one of the previous claims, wherein a positive electrode current collector of the wound core is aluminum foil, and the ratio of an exposed height of the aluminum foil to a height of the wound core is 1 : 1 to 1 : 200.

13. The cylindrical battery as claimed in any
one of the previous claims, wherein the top of the expansion tape (4) is located between the top of the separator (3) and a position 0.8 mm above the top of the separator (3) before flattening of the wound core, and a flattening process step will proceed until a position 0.8 mm above the top of the separator (3) is reached and then stop, so there will be no interference with a position of the expansion tape (4).
